# EUROPÄISCHE PATENTSCHRIFT

(11) **EP 0 537 567 B1**
(45) Veröffentlichungstag und Bekanntmachung des Hinweises auf die Patenterteilung: **03.05.1995**
(21) Anmeldenummer: 92116862.1
(22) Anmeldetag: 02.10.1992
(51) Int. Cl.: B29B 17/02, C08J 11/06

(54) **Reinigung von Polycarbonat und Polyestercarbonat-Abfällen**
Washing of polycarbonate and polyestercarbonate originated in waste
Nettoyage des d'echets en polycarbonate et polyestercarbonate

(30) Priorität: 15.10.1991 DE 4134019
(43) Veröffentlichungstag der Anmeldung: 21.04.1993
(73) Patentinhaber: BAYER AG, 51368 Leverkusen (DE)
(72) Erfinder: Fennhoff, Gerhard, Dr., W-4156 Willich 2 (DE); Jakob, Wolfgang, W-4130 Moers (DE); Ehlert, Manfred, W-4047 Dormagen (DE)

(56) Entgegenhaltungen:
- EP-A- 0 476 475
- DE-A- 3 511 711
- DATABASE WPIL Section Ch, Week 9038, Derwent Publications Ltd., London, GB;Class A05, AN 90-288141

## Beschreibung

Audio Compact Discs werden aus aromatischen Polycarbonaten nach dem Spritzgußverfahren hergestellt. Die so erzeugten Formteile werden durch Aufdampfen von Aluminium verspiegelt und mittels vernetzender Lacke oberflächenversiegelt. Ferner werden sie mit Farbstoffen bedruckt. Zuletzt erfolgt eine Qualitätskontrolle, in der 10 % bis 15 % der produzierten Compact Discs aufgrund von Fehlern ausgesondert werden.

Linsen werden ähnlich wie Audio Compact Discs durch vernetzende Lacke oder auch durch Polysiloxane oberflächenversiegelt. Auch hier fallen durch die Qualitätskontrolle erhebliche Mengen Polymerabfalls an.

Lampen- und Scheinwerferreflektoren sind aluminiumbeschichtet. Abfälle entstehen sowohl bei der Herstellung dieser Formteile als auch nach deren Verwendung.

Ähnliche Probleme bestehen beim technischen Einsatz von aromatischen Polyestercarbonaten.

Derartige Polycarbonatabfälle und/oder Polyestercarbonatabfälle können aufgrund ihres Metallgehaltes, der Lacke oder der Farbstoffe nicht durch direktes Neuverspritzen oder als Mischung mit weiteren Polymeren und/oder Polykondensaten für andere hochwertige Formteile wiederverwendet werden.

Es war deshalb Aufgabe der Erfindung, derartige Kunststoffabfälle durch ein einfaches, technisch durchführbares Verfahren so aufzuarbeiten, daß die aromatischen Polycarbonate und, die aromatischen Polyestercarbonate einer neuen Anwendung zugeführt werden können.

Gegenstand der vorliegenden Erfindung ist somit ein Verfahren zur Reinigung von Abfällen aus thermoplastischen aromatischen Polycarbonaten und/oder aus thermoplastischen, aromatischen Polyestercarbonaten, die Aluminium, und/oder Lacke und/oder Farbstoffe enthalten, das dadurch gekennzeichnet ist, daß die Polykondensatabfälle
1. zu Bruchstücken eines mittleren Durchmessers von 0,1 cm bis 5 cm, bevorzugt von 0,5 cm bis 1,5 cm, zerkleinert,
2. diese Bruchstücke danach mit verdünnten Basen einer Konzentration von 0,01 Mol bis zu 2,5 Mol pro liter lösungsmittel, bei Temperaturen zwischen 10°C und 100°C, vorzugsweise zwischen 70°C und 95°C, 20 Minuten bis 300 Minuten, vorzugsweise 90 Minuten bis 180 Minuten, verrührt,
3. nach dem Entfernen der Basen mit verdünnten Säuren gespült und
4. anschließend mit Wasser elektrolytfrei gewaschen werden,
5. anschließend die elektrolytfrei gewaschenen Bruchstücke der Polykondensate in der Weise unter gelindem Rühren mit H₂O gespült werden, daß gegebenenfalls alle von den Bruchstücken des Polykondensats abgetrennten, jedoch noch nicht gelösten Lackanteile, Aluminium oder Farbstoffanteile ausgespült werden, und
6. die gereinigten Bruchstücke der Polycarbonatabfälle und/oder der Polyestercarbonatabfälle und/oder der Polyesterabfälle abfiltriert und getrocknet werden.

Die Zerkleinerung der Polykondensatabfälle zu Bruchstücken erfolgt vorzugsweise mittels eines Shredders oder einer Mühle (siehe dazu beispielsweise ''Ullmanns Encyklopädie der technischen Chemie'', 4. Auflage, 1972, Band 2, Verfahrenstechnik I (Grundoperationen) Seiten 2 bis 34).

Basen im Sinne der vorliegenden Erfindung sind beispielsweise verdünnte wäßrige und/oder verdünnte alkoholische Lösungen von Alkali- und/oder verdünnte wäßrige und/oder verdünnte alkoholische Lösungen von Erdalkalihydroxiden und/oder verdünnte wäßrige und/oder verdünnte alkoholische Lösungen von Ammoniak und/oder verdünnte wäßrige und/oder verdünnte alkoholische Lösungen von organischen Aminen. Bevorzugt sind verdünnte wäßrige Lösungen von Alkalihydroxiden, besonders bevorzugt sind verdünnte wäßrige Lösungen von Natrium- und/oder Kaliumhydroxid.

Die Basen werden in Konzentrationen von 0,01 Mol pro Liter Lösungsmittel bis 2,5 Mol pro Liter Lösungsmittel verwendet, vorzugsweise in Konzentrationen von 0,05 Mol pro Liter Lösungsmittel bis 1,5 Mol pro Liter Lösungsmittel.

Die Menge der Basen pro kg Polykondensatbruchstück beträgt 0,05 Mol Base pro kg Polykondensat bis 2,5 Mol Base pro kg Polykondensat. Bevorzugte Bereiche sind 0,5 Mol bis 1,5 Mol pro kg Polykondensat.

Verdünnte Säuren zum Entfernen von Basenresten im Sinne der vorliegenden Erfindung sind Mineralsäuren wie beispielsweise Halogenwasserstoffsäuren, wobei Halogen Chlor, Brom oder Jod sein kann, Perchlorsäure, Phosphorsäure oder Schwefelsäure, es können jedoch auch verdünnte Lösungen organischer Säuren in Wasser wie beispielsweise Ameisensäure, Essigsäure und/oder Propionsäure verwendet werden.

Die Konzentration der verdünnten Säuren liegen zwischen 0,01 Mol pro Liter Lösungsmittel und 0,5 Mol pro Liter Lösungsmittel.

Die Menge an Säuren liegt zwischen 0,5 kg Säure pro 1 000 kg Polykondensat und 6 kg Säure pro 1 000 kg Polykondensat.

Die Wäsche der Bruchstücke und das Spülen der Bruchstücke gemäß Verfahrensschritte 4 und 5 des erfindungsgemäßen Verfahrens erfolgt vorzugsweise mit destilliertem Wasser bei Temperaturen von 10°C bis 100°C, vorzugsweise von 20°C bis 35°C. Waschzeit und Menge an Wasser ergeben sich für den Fachmann in jedem Einzelfall problemlos. Elektrolytfrei im Sinne vorliegender Erfindung bedeutet, daß die abfließenden Waschwässer in etwa zwischen pH 6 und pH 7 liegen.

Die Filtration der gespülten Bruchstücke gemäß Schritt 6 des erfindungsgemäßen Verfahrens erfolgt auf bekannten Filteranlagen.

Die Trocknung der Bruchstücke der Polykondensatabfälle erfolgt auf üblichen Trockenapparaturen (siehe dazu beispielsweise "Ullmanns Encyklopädie der technischen Chemie'', 4. Auflage (1972) Band 2, Verfahrenstechnik I (Grundoperationen) Seiten 699 bis 721).

Die nach dem erfindungsgemäßen Verfahren gereinigten Polycarbonate, Polyestercarbonate und Polyester sind frei von störenden Verunreinigungen und lassen sich somit wieder in bekannter Weise zu Formkörpern verarbeiten und auch mit anderen Thermoplasten, beispielsweise mit Polyalkylenterephthalaten, mit Styrol-Acrylnitril-Polymerisaten oder mit ABS-Pfropfpolymerisaten in bekannter Weise zu Kunststofflegierungen verarbeiten.

Der Gegenstand des erfindungsgemäßen Verfahrens und sein Ergebnis war deshalb nicht naheliegend, weil einerseits die in Rede stehenden Polykondensate Basenempfindlich sind, und weil nicht zu erwarten war, daß die überwiegende Menge an Lacken und Farbstoffen, die in den Polykondensaten eingesetzt wird, durch die basische Behandlung gemäß erfindungsgemäßem Verfahren abgelöst und weitgehend aufgelöst wird.

Lacke, die sich im Sinne der vorliegenden Erfindung vom Polymer ablösen und zum Teil auflösen lassen, sind beispielsweise solche auf Polyacrylnitril-, Polyacrylat-, Polymethacrylat-, Polyvinylchlorid-, Melamiharz-, Epoxiisocyanat- oder Polyurethanbasis.

Mit dem erfindungsgemäßen Reinigungsprozeß abzutrennende Farbstoffe sind beispielsweise solche auf Basis von Naphthachinonen, Benzochinonen, Anthrachinonen und Azoverbindungen, sowie organische Pigmente und anorganische Pigmente wie Eisenoxide, Chromoxide und Titandioxid.

Thermoplastische, aromatische Polycarbonate im Sinne der Erfindung sind Polycarbonate, die nach den üblichen, in der Literatur bekannten Methoden aus Diphenolen und Carbonatspendern hergestellt worden sind. (Siehe beispielsweise ''H. Schnell, Chemistry and Physics of Polycarbonates, Interscience Publishers, New York, 1964'', US Patent 3 028 365 und deutsche Offenlegungsschrift 3 832 396 (Le A 26 344).

Diphenole für solche Polycarbonate können beispielsweise
Hydrochinone,
Resorcine,
Dihydroxydiphenyle,
Bis-(hydroxyphenyl)-alkane,
Bis-(hydroxyphenyl)-cycloalkane,
Bis-(hydroxyphenyl)-sulfine,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole,
sowie deren kernalkylierte und kernhalogenierte Verbindungen sein.

Bevorzugte Diphenole sind z.B.:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan.
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethylcyclohexan.

Besonders bevorzugte Diphenole sind z.B.:
2,2-Bis-(4-hydroxyphenyl)-propan,
2,2-Bis-(3,5-dimethyl-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Es können auch beliebige Mischungen der vorgenannten Diphenole verwendet worden sein.

Die Diphenole sind entweder literaturbekannt oder nach bekannten Verfahren herstellbar.

Aromatische Polyestercarbonate im Sinne der Erfindung sind solche, die aus mindestens einem aromatischen Bisphenol, aus mindestens einer aromatischen Dicarbonsäure und aus Kohlensäure aufgebaut sind. Geeignete Diphenole sind die vorstehend aufgeführten. Geeignete aromatische Dicarbonsäuren sind beispielsweise Orthophthalsäure, Terephthalsäure, Isophthalsäure, tert.-Butylisophthalsäure, 3,3'-Diphenyletherdicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-Carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Die aromatischen Polyestercarbonate können nach Verfahren hergestellt worden sein, wie sie für die Polyestercarbonatherstellung aus der Literatur bekannt sind, so z.B. nach Verfahren in homogener Lösung, nach Schmelzumesterungsverfahren, und nach dem Zweiphasengrenzflächenverfähren.

Aromatische Polycarbonate bzw. aromatische Polyestercarbonate im Sinne der vorliegenden Erfindung sind, insbesondere solche, deren Gewichtsmittel M̅_{w} ebenfalls zwischen 10 000 und 200 000, vorzugsweise zwischen 16 000 und 80 000 liegen, ermittelt durch Gelpermeationschromatographie in bekannter Weise.

Die nach dem erfindungsgemäßen Verfahren gereinigten Polycarbonat-, und Polyestercarbonat-Abfälle lassen sich wieder wie die originären Harze zu den verschiedensten Formkörpern, beispielsweise auch zu Folien, auf den üblichen Maschinen, wie Extrudern oder Spritzgußmaschinen, verarbeiten.

Derartige Formkörper können dann in bekannter Weise auf dem Elektrosektor, für optische Anwendungen in der Automobilindustrie oder als Lampenabdeckungen oder Dachabdeckungen eingesetzt werden.

Sie können vor oder während ihrer Verarbeitung noch mit den üblichen Additiven, Stabilisatoren, Entformungsmitteln etc., die für Polycarbonat und Polyestercarbonate bzw. für Polyester geläufig sind, in den üblichen Mengen versehen werden.

### Beispiele

A. Die für die folgenden Versuche eingesetzten Compact-Disc-Abfälle (Polycarbonat mit Aluminium bedampft und Lack überzogen) wurden zuvor mit Hilfe eines Shredders zu einer Teilchengröße von 1 mm bis 15 mm zerkleinert. Die so erhaltene Shredderware enthielt insgesamt 0,35 Gew.-% Lack (vernetztes Polyacrylnitril und vernetztes Polyvinylchlorid) und Aluminium.

Die relative Lösungsviskosität des Polycarbonats der Shredderware nach mechanischer Abtrennung von Lacken und Aluminium (0,5 g Polycarbonat in 100 ml Dichlormethan bei 23°C) betrug 1,196.

### Beispiel 1

Zu 450 g einer 5 %igen Natriumhydroxidlösung werden 300 g der unter A. genannten Compact Disc-Shredderware unter Rühren gegeben und 90 Minuten bis zum Sieden erhitzt, so daß das gesamte Aluminium und Teile der Lacke gelöst sind und die noch verbliebenen Lackreste sich vom Polycarbonat abgelöst bzw. gelöst haben. Nach dem Entfernen der Natriumhydroxidlösung wäscht man das Polycarbonat mit 10 %iger Essigsäure und anschließend mit entsalztem Wasser neutral und spült dabei die zurückgebliebenen, abgelösten Lackreste aus. Nach dem Abfiltrieren des Polycarbonats trocknet man es bei 120°C.

Die relative Lösungsviskosität des Recyclats hatte sich gegenüber dem unter A. genannten Wert nicht verändert.

### Beispiel 2

Wie Beispiel 1, aber mit 5 %iger Kaliumhydroxidlösung anstelle der 5 %igen Natriumhydroxidlösung.

Die relative Lösungsviskosität des Recyclats hatte sich gegenüber dem unter A. genannten Wert nicht verändert.

### Beispiel 3

In einem 500 l Rührkessel mit angeflanschtem Filter und Flotationsablauf werden 200 kg 5 %ige Natriumhydroxidlösung vorgelegt. Der Kessel wird evakuiert und anschließend mit Stickstoff gespült. Der Gasaustauch wird weitere zweimal wiederholt und schließlich mit 15 m³ Stickstoff pro Stunde beschleiert. Zum Kesselinhalt gibt man unter ständigem Rühren 100 kg des unter A. bezeichneten Polycarbonatabfalls, heizt unter ständigem Rühren auf 90°C auf und hält drei Stunden bei dieser Temperatur. Danach wird auf 30°C abgekühlt und die Natriumhydroxidlösung abgelassen. Das im Kessel verbliebene Polycarbonat wird mit 200 kg 0,5 %iger Essigsäure gewaschen und anschließend mit entsalztem Wasser neutralgewaschen, wobei die vom Polycarbonat abgelösten Lackrückstande herausgespült werden. Das Polycarbonat wird zuletzt bei 120°C getrocknet.

Die relative Lösungsviskosität des Recyclats hatte sich gegenüber dem unter A. genannten Wert nicht verändert.

## Patentansprüche

Verfahren zur Reinigung von Abfällen aus thermoplastischen, aromatischen Polycarbonaten und/oder thermoplastischen, aromatischen Polyestercarbonaten, die Aluminium und/oder Lacke und/oder Farbstoffe enthalten, dadurch gekennzeichnet, daß die Polykondensatabfälle

1. zu Bruchstücken eines mittleren Durchmessers von 0,1 cm bis 5 cm zerkleinert,

2. diese Bruchstücke danach mit verdünnten Basen einer Konzentration von 0,01 Mol bis 2,5 Mol pro liter lösungsmittel, bei Temperaturen von 10°C bis 100°C 20 Minuten bis 300 Minuten verrührt,

3. nach dem Entfernen der Basen mit verdünnten Säuren gespült und

4. anschließend mit Wasser elektrolytfrei gewaschen werden,

5. anschließend die elektrolytfrei gewaschenen Bruchstücke der Polykondensate in der Weise unter gelindem Rühren mit H₂O gespült werden, daß gegebenenfalls alle von den Bruchstücken des Polykondensats abgetrennten, jedoch noch nicht gelösten Lackanteile, Aluminium oder Farbstoffanteile ausgespült werden, und

6. die gereinigten Bruchstücke der Polycarbonatabfälle und/oder Polyestercarbonatabfälle abfiltriert und getrocknet werden.

## Claims

A process for the purification of waste of thermoplastic aromatic polycarbonates and/or thermoplastic aromatic polyester carbonates containing aluminium and/or lacquers and/or dyes, characterized in that the polycondensate waste

1. is size-reduced to fragments with a mean diameter of 0.1 cm to 5 cm,

2. the fragments obtained are then stirred with dilute bases having a concentration of 0.01 mol to 2.5 mol per litre of solvent for 20 to 300 minutes at temperatures of 10°C to 100°C,

3. washed with dilute acids after removal of the bases and

4. subsequently washed with water until free from electrolytes,

5. the polycondensate fragments washed free from electrolytes are then washed with water while gently stirring so that all the lacquer components, aluminium or dye components separated from the polycondensate fragments, but not yet dissolved are rinsed out and

6. the purified fragments of polycarbonate waste and/or polyester carbonate waste are filtered off and dried.

## Revendications

Procédé pour la purification de déchets de polycarbonates aromatiques thermoplastiques et/ou de polyestercarbonates aromatiques thermoplastiques qui contiennent de l'aluminium et/ou des laques ou des vernis et/ou des colorants, caractérisé en ce que

1. on broie les déchets de polycondensats en fragments ayant un diamètre moyen de 0,1 cm à 5 cm,

2. on délaie ensuite ces fragments avec des bases diluées ayant une concentration de 0,01 mole à 2,5 moles par titre de solvant, à des températures de 10°C à 100°C, pendant un laps de temps de 20 minutes à 300 minutes,

3. après élimination des bases, on rince avec des acides dilués, et

4. on lave ensuite avec de l'eau pour éliminer les électrolytes,

5. ensuite, tout en agitant modérément, on rince avec H₂O les fragments des polycondensats dont on a éliminé les électrolytes par lavage, de telle sorte que, le cas échéant, toutes les fractions de laques ou de vernis, les fractions d'aluminium ou de colorants séparées du polycondensat, mais pas encore dissoutes soient éliminées par rinçage, et

6. on sépare par filtration les fragments purifiés des déchets de polycarbonates et/ou des déchets de polyestercarbonates et on les sèche.
